# EUROPÄISCHE PATENTANMELDUNG

(11) **EP 1 679 245 A1**
(43) Veröffentlichungstag der Anmeldung: **12.07.2006**
(21) Anmeldenummer: 05112309.9
(22) Anmeldetag: 16.12.2005
(51) Int. Cl.: B62D 5/04, B62D 6/04, B62D 5/00

(54) **Betriebsverfahren für ein elektromotorisch unterstütztes Fahrzeug-Lenksystem**

(30) Priorität: 22.12.2004 DE 102004061832
(71) Anmelder: Bayerische Motoren Werke Aktiengesellschaft, 80809 München (DE)
(72) Erfinder: Schmidt, Roland, 82131, Stockdorf (DE)

(57) **Zusammenfassung**

Die Erfindung betrifft ein Betriebsverfahren für ein elektromotorisch unterstütztes Fahrzeug-Lenksystem mit zumindest zwei Elektromotoren und insbesondere ein Überlagerungs-Lenksystem, bei dem ein erster Elektromotor einem vom Fahrer vorgegebenen und mechanisch zu den lenkbaren Rädern übertragenem Lenkmoment ein Unterstützungsmoment hinzufügen kann, während ein zweiter Elektromotor einem vom Fahrer vorgegebenen und mechanisch zu den lenkbaren Rädern übertragenen Lenkwinkel einen gleichgerichteten oder entgegen gerichteten Lenkwinkel hinzufügen kann. Vorgeschlagen wird, die Elektromotoren im gleichzeitigen Bedarfsfall zeitlich versetzt anzusteuern und somit zeitlich zueinander versetzt in Betrieb zu nehmen. Bevorzugt wird im Bedarfsfall der das Unterstützungsmoment bereitstellende Elektromotor vor dem einen Lenkwinkel hinzufügenden Elektromotor in Betrieb genommen, wodurch der Spitzenbedarf von elektrischer Leistung möglichst gering gehalten wird.

## Beschreibung

Die Erfindung betrifft ein Betriebsverfahren für ein elektromotorisch unterstütztes Fahrzeug-Lenksystem mit zumindest zwei Elektromotoren, insbesondere Überlagerungs-Lenksystem, bei dem ein erster Elektromotor einem vom Fahrer vorgegebenen und mechanisch zu den lenkbaren Rädern übertragenem Lenkmoment ein Unterstützungsmoment hinzufügen kann, während ein zweiter Elektromotor einem vom Fahrer vorgegebenen und mechanisch zu den lenkbaren Rädern übertragenen Lenkwinkel einen gleichgerichteten oder entgegen gerichteten Lenkwinkel hinzufügen kann.

Heutige Fahrzeuge, insbesondere Personenkraftwagen, sind in der Regel mit einer Lenkhandhabe bzw. einem Lenkrad versehen, das mechanisch mit lenkbaren Fahrzeugrädern zwangsgekoppelt ist. Ferner ist eine Lenkunterstützungseinrichtung (Servounterstützung) vorgesehen, mit der hydraulisch oder elektrohydrauüsch oder elektromechanisch die Betätigung des Lenkmechanismus in Reaktion auf die Drehung der Lenkhandhabe unterstützt wird. Dadurch ist der Kraftaufwand eines Fahrers des Fahrzeugs beim Lenken verringert. Ferner sind sog. Überlagerungs-Lenksysteme bekannt, mittels denen dem vom Fahrer vorgegebenen Lenkwinkel unter bestimmten Betriebszuständen des zugehörigen Fahrzeugs eine weitere Lenkbewegung mittels eines Aktuators und eines geeigneten Überlagerungsgetriebes überlagert werden kann. Die zusätzliche Lenkbewegung wird durch einen Regler definiert und dient beispielsweise zur Erhöhung der Stabilität und Agilität des Fahrzeugs, zur Kompensation von Störgrößen und zur Anpassung der Radlenkwinkel als Funktion der Fahrgeschwindigkeit des Fahrzeugs.

Sowohl als Aktuator eines Überlagerungslenksystems, als auch als sog. Momentenquelle zur Aufbringung eines Unterstützungsmomentes kann jeweils ein Elektromotor zum Einsatz kommen, wobei sich Elektromotoren durch einfache Ansteuerbarkeit auszeichnen und am Gesamtsystem einen relativ geringen Bauaufwand erforderlich machen. Problematisch ist jedoch die Bereitstellung einer ausreichenden elektrischen Leistung bzw. Eneregie zum parallelen Betreiben zumindest zweier Elektromotoren eines Lenksystems. Insbesondere das Anfahren bzw. Anlaufen zumindest zweier Elektromotoren im Falle einer entsprechenden Lenkanforderung durch den Fahrer des Fahrzeugs kann kurzzeitig zu extrem hohen Stromspitzen führen, und zwar insbesondere bei schwereren Fahrzeugen, so dass deren elektrisches Bordnetz in unzulässig hoher Weise belastet würde.

Eine Abhilfemaßnahme für diese geschilderte Problematik aufzuzeigen, ist Aufgabe der vorliegenden Erfindung.
Die Lösung dieser Aufgabe ist für ein Betriebsverfahren nach dem Oberbegriff des Anspruchs 1 dadurch gekennzeichnet, dass die Elektromotoren im gleichzeitigen Bedarfsfall zeitlich versetzt angesteuert und somit zeitlich zueinander versetzt in Betrieb genommen werden. Insbesondere soll im Bedarfsfall der das Unterstützungsmoment bereitstellende Elektromotor vor dem einen Lenkwinkel hinzufügenden Elektromotor in Betrieb genommen werden.

Um somit einen extremen sog. Anfahr-Peak im zeitlichen Verlauf des Bedarfs an elektrischen Strom zu vermeiden, wird vorgeschlagen, die mehreren Elektromotoren des Lenksystems, von denen selbstverständlich auch jeder beim Anfahren einen sog. Strom-Peak erzeugt bzw. kurzzeitigen Spitzenbedarf von elektrischem Strom nachfragt, nicht gleichzeitig, sondern mit geringem zeitlichen Versatz in Betrieb zu nehmen. Dabei liegt der sog. Anfahr-Peak eines einzelnen Elektromotors zeitlich in der Größenordnung von mehreren Millisekunden. Damit sich die Peaks der einzelnen Elektromotoren nicht zu einem extremen Anfahr-Peak addieren, ist es also ausreichend, wenn die einzelnen Elektromotoren zumindest um mehrere Millisekunden zueinander versetzt angefahren, d.h. im Falle eines vom Fahrer des Fahrzeugs vorgegebenen Lenkwunsches unter zeitlichem Versatz entsprechend in Betrieb genommen werden.

Bevorzugt wird dann, wenn der Fahrer des Fahrzeugs einen Lenkwunsch vorgibt, also im sog. Bedarfsfall, der die Lenkunterstützung bereitstellende Elektromotor zuerst angesteuert und in Betrieb genommen und der andere, einen zusätzlichen Lenkwinkel überlagernde Elektromotor erst kurzzeitig später, so dass dem Fahrer sicher die maximal mögliche Lenkunterstützung zur Verfügung steht, während ein Überlagerungs-Lenkwinkel auch noch mit minimaler zeitlicher Verzögerung voll wirksam werden kann.

## Patentansprüche

1. Betriebsverfahren für ein elektromotorisch unterstütztes Fahrzeug-Lenksystem mit zumindest zwei Elektromotoren, insbesondere Überlagerungs-Lenksystem, bei dem ein erster Elektromotor einem vom Fahrer vorgegebenen und mechanisch zu den lenkbaren Rädern übertragenem Lenkmoment ein Unterstützungsmoment hinzufügen kann, während ein zweiter Elektromotor einem vom Fahrer vorgegebenen und mechanisch zu den lenkbaren Rädern übertragenen Lenkwinkel einen gleichgerichteten oder entgegen gerichteten Lenkwinkel hinzufügen kann,
**dadurch gekennzeichnet, dass** die Elektromotoren im gleichzeitigen Bedarfsfall zeitlich versetzt angesteuert und somit zeitlich zueinander versetzt in Betrieb genommen werden.

2. Betriebsverfahren nach Anspruch 1,
**dadurch gekennzeichnet, dass** im Bedarfsfall der das Unterstützungsmoment bereitstellende Elektromotor vor dem einen Lenkwinkel hinzufügenden Elektromotor in Betrieb genommen wird.
